(19) Europäisches Patentamt
European Patent Office
Office européen des brevets

(11) **EP 3 065 443 B1**

(12) **EUROPEAN PATENT SPECIFICATION**

(45) Date of publication and mention
of the grant of the patent:
**24.07.2019 Bulletin 2019/30**

(51) Int Cl.:
***H04W 36/00*** *(2009.01)*     *H04W 24/10* *(2009.01)*
*H04W 36/04* *(2009.01)*     *H04W 48/10* *(2009.01)*
*H04W 52/02* *(2009.01)*     *H04W 84/04* *(2009.01)*
*H04J 11/00* *(2006.01)*

(21) Application number: **13896593.4**

(22) Date of filing: **31.10.2013**

(86) International application number:
**PCT/CN2013/086292**

(87) International publication number:
**WO 2015/062011 (07.05.2015 Gazette 2015/18)**

(54) **MEASUREMENT CONFIGURATION METHOD, IDENTIFICATION AND MEASUREMENT METHODS, MACRO BASE STATION AND UE**

MESSKONFIGURATIONSVERFAHREN, IDENTIFIZIERUNGS- UND MESSVERFAHREN, MAKROBASISSTATION UND BENUTZERGERÄT

PROCÉDÉ DE CONFIGURATION DE MESURE, PROCÉDÉS D'IDENTIFICATION DE MESURE, MACROSTATION DE BASE ET UE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.09.2016 Bulletin 2016/36**

(73) Proprietor: **Huawei Technologies Co., Ltd.
Longgang District
Shenzhen, Guangdong 518129 (CN)**

(72) Inventors:
• **LI, Anjian
Shenzhen
Guangdong 518129 (CN)**
• **XIAO, Dengkun
Shenzhen
Guangdong 518129 (CN)**
• **LI, Hong
Shenzhen
Guangdong 518129 (CN)**
• **ZUO, Chen
Shenzhen
Guangdong 518129 (CN)**

(74) Representative: **Gill Jennings & Every LLP
The Broadgate Tower
20 Primrose Street
London EC2A 2ES (GB)**

(56) References cited:
WO-A1-2013/049199    CN-A- 101 128 000
CN-A- 102 711 167    US-A1- 2009 111 383

• "3rd Generation Partnership Project; Technical Specification Group Radio Access Network; Evolved Universal Terrestrial Radio Access (E-UTRA); Radio Resource Control (RRC); Protocol specification (Release 11)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.5.0, 16 September 2013 (2013-09-16), pages 1-347, XP050712276, [retrieved on 2013-09-16]
• KDDI CORPORATION: "Possible solutions for improved small cell discovery", 3GPP DRAFT; R2_131791_SCD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 10 May 2013 (2013-05-10), XP050699804, Retrieved from the Internet: URL:http://www.3gpp.org/ftp/tsg_ran/WG2_RL 2/TSGR2_82/Docs/ [retrieved on 2013-05-10]

**(Cont. next page)**

- "3rd Generation Partnership Project; Technical Specification Group Radio Access Network; Evolved Universal Terrestrial Radio Access (E-UTRA); Physical layer; Measurements (Release 11)", 3GPP STANDARD; 3GPP TS 36.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.1.0, 15 December 2012 (2012-12-15), pages 1-14, XP050691178, [retrieved on 2012-12-15]

**Description**

**TECHNICAL FIELD**

Embodiments of the present invention relate to the field of communications technologies, and in particular, to a measurement configuration method, an identification and measurement method, a macro base station, and UE.

**BACKGROUND**

In an application scenario in which both a small base station and a macro base station are deployed, to enable a function, of the small base station, of assisting the macro base station in sharing load, it is required that when user equipment (User Equipment, UE) is close to the small base station, the UE can identify the small base station in time, perform radio resource management (Radio Resource Management, RRM) measurement of the small base station, and then report a measurement result to the macro base station. Finally, the macro base station eventually determines, by combining the measurement result of the UE and other input conditions such as network load and a user service priority, whether to hand over the UE to a small cell of the small base station, so that the small cell of the small base station continues to provide a service to a user. Therefore, identification and measurement of an inter-frequency cell by the UE need to be researched.

In the prior art, identification and measurement of an inter-frequency cell are generally implemented by configuring a measurement gap for UE. The measurement gap is suspending, by a serving cell according to a particular period, data reception and transmission for UE or some UEs, and during the suspension, these UEs may tune carrier frequencies of the UEs to other carrier frequencies, attempt to identify a cell on the other carrier frequencies, and measure the identified cell.

It is assumed that F1 is a macro base station, F2 is a small base station, and the macro base station F1 and the small base station F2 have different carrier frequencies. Typically, a small base station is generally deployed in a high frequency band, for example, 3.5 GHz, and a macro base station is generally deployed in a relatively low frequency band, for example, 2 GHz. Assuming that a cell of the macro base station F1 provides a service to UE currently, F1 needs to suspend the service, and the UE needs to tune to a carrier frequency of F2, identify and measure a cell that may exist in F2, and then report a measurement result to the serving base station F1 in a case in which the measurement result meets a preset condition.

In the prior art, a measurement gap pattern configured by the macro base station for the UE is generally fixed and unchanged, as shown in Table 1.

**Table 1**

| Measurement gap pattern identity | Measurement gap length (millisecond) | Measurement gap period (millisecond) | Minimum available time (millisecond) for inter-frequency cell measurement within 480 milliseconds |
|---|---|---|---|
| 1 | 6 | 80 | 30 |

When the macro base station configures, for the UE, a measurement gap pattern whose measurement gap pattern identity is 1, that is, a configured measurement gap period is 80 milliseconds, a measurement gap length is 6 ms, and a time that may be used for measurement within 6 ms is 5 ms, a minimum available time for inter-frequency cell measurement within 480 ms $T_{Inter}=(480/80)*5$ ms=30 ms.

When the UE is in a continuous reception mode, an identification time of the UE for a small cell is related to a measurement gap period in a measurement gap pattern, and a specific identification time may be calculated by using the following formula:

$$L_{Identify\text{-}Inter} = T_{Basic\text{-}Identify\text{-}Inter} * (480/T_{Inter}) * N_{Freq}$$

where $T_{Basic\text{-}Identify\text{-}Inter}$ is a fixed value and is equal to 480 milliseconds, $T_{Inter}$ is a minimum available time for inter-frequency cell measurement within 480 milliseconds, a value of $T_{Inter}$ is determined by a configured measurement gap period, and $N_{Freq}$ is a total quantity of inter-frequency carriers and carriers of a heterogeneous system network in current coverage.

When the UE is in a discontinuous reception mode, an identification time of the UE for a small cell is related to a current discontinuous reception (Discontinuous Reception, DRX) period of the UE; therefore, herein only a case in which the UE is in a signal continuous reception mode is considered.

Specifically, an example of calculating a time for the UE in a signal continuous reception mode to identify a small cell is as follows:

It is assumed that there are three networks in current coverage, for example, a Global System for Mobile Communications (global system for mobile communications, GSM), LTE, and a Universal Mobile Telecommunications System (Universal Mobile Telecommunications System, UMTS) overlap, that is, $N_{Freq}$ is equal to 3.

A time needed by the UE to identify a small cell of a small base station by using a measurement gap pattern 1 is:

$$L_{Identify-Inter} = T_{Basic-Identify-Inter}*(480/T_{Inter})*N_{Freq} = 480*(480/30)*3$$

$$= 23040 \text{ milliseconds} = 23.04 \text{ seconds}$$

When the UE is relatively far away from the small base station, there is a low probability that the UE is handed over to the small base station and the small base station provides a service. However, the UE needs to perform identification and measurement according to a pre-configured measurement gap pattern, for example, perform measurement according to a measurement gap pattern 1. Relatively, if measurement frequency is higher, the cost is that a current throughput of the macro base station is affected. Moreover, frequent identification and measurement of a small cell by the UE also cause a meaningless waste of power consumption of the UE.

When the UE is relatively close to the small cell, there is a high probability that the UE is handed over to the small base station and the small base station provides a service. Likewise, the UE still needs to perform measurement by using a preset measurement gap pattern, that is, perform measurement according to the measurement gap pattern 1, which may cause an excessively long time for cell search. As a result, the UE cannot identify the small cell of the small base station in time. In this case, the UE also cannot be connected to the small cell of the small base station in time, and therefore the UE cannot achieve in time an objective of sharing load by using the small cell.

WO 2013/049199 relates to method and system for small cell discovery in heterogeneous cellular networks. The technical specifications published by the 3rd Generation Partnership Project namely, 3GPP TS 36.331 and 3GPP TS 36.214 relate to "Radio Resource Control (RRC); Protocol specification (Release 11)" and "Physical layer; Measurements (Release 11)" respectively. 3GPP draft submission by KDDI CORPORATION titled, "Possible solutions for improved small cell discovery" discloses some possible solutions to improve small cell discovery.

## SUMMARY

Embodiments of the present invention provide a measurement configuration method, an identification and measurement method, a macro base station, and UE, which can reduce unnecessary power consumption of UE, and can achieve an objective of sharing load in time by using a small cell.

A first aspect of the embodiments of the present invention provides a measurement configuration method according to claim 1. A second aspect of the embodiments of the present invention provides an identification and measurement method according to claim 3. A third aspect of the embodiments of the present invention provides a macro base station according to claim 6. A fourth aspect of the embodiments of the present invention provides user equipment UE according to claim 8. Further technical features of each of these aspects are defined in respective dependent claims.

It can be seen from the foregoing technical solutions that, the embodiments of the present invention have the following advantages:

In the embodiments of the present invention, a macro base station initially configures a first measurement gap pattern for UE, and when the macro base station receives indication information sent by the UE and used to represent that quality of a signal radiated by a small base station and received by the UE is higher than or equal to a preset signal quality threshold, the macro base station configures a second measurement gap pattern for the UE, where a measurement gap period in the second measurement gap pattern is less than a measurement gap period in the first measurement gap pattern. That is, the macro base station changes the configured measurement gap pattern according to the quality of the radiated signal received by the UE. When the quality of the radiated signal received by the UE is lower than the preset signal quality threshold, the UE may be relatively far away from the small base station, and the macro base station configures a measurement gap pattern including a relatively long measurement gap period (relatively low measurement frequency) for the UE, which can reduce an effect on a throughput of the macro base station and reduce, for the UE, power consumption for identifying and measuring an inter-frequency cell. When the quality of the radiated signal received by the UE is higher than or equal to the preset signal quality threshold, the UE may be already close to a small cell, and the macro base station configures a measurement gap pattern including a relatively short measurement gap period (relatively high measurement frequency) for the UE, which can ensure that the UE identifies and is connected to the small cell of the small base station in time, thereby achieving an objective of sharing load in time by using the small cell.

**BRIEF DESCRIPTION OF DRAWINGS**

FIG. 1 is a schematic diagram of an embodiment of a measurement configuration method according to an embodiment of the present invention;

FIG. 2 is a schematic diagram of another embodiment of a measurement configuration method according to an embodiment of the present invention;

FIG. 3 is a schematic diagram of an embodiment of an identification and measurement method according to an embodiment of the present invention;

FIG. 4 is a schematic diagram of another embodiment of an identification and measurement method according to an embodiment of the present invention;

FIG. 5 is a schematic diagram of an embodiment of a macro base station according to an embodiment of the present invention;

FIG. 6 is a schematic diagram of another embodiment of a macro base station according to an embodiment of the present invention;

FIG. 7 is a schematic diagram of an embodiment of UE according to an embodiment of the present invention;

FIG. 8 is a schematic diagram of another embodiment of UE according to an embodiment of the present invention;

FIG. 9 is a schematic diagram of another embodiment of a macro base station according to an embodiment of the present invention; and

FIG. 10 is a schematic diagram of another embodiment of UE according to an embodiment of the present invention.

**DESCRIPTION OF EMBODIMENTS**

Embodiments of the present invention provide a measurement configuration method, an identification and measurement method, a macro base station, and UE, which can reduce unnecessary power consumption of UE, and can ensure that the UE is connected to a small cell of a small base station in time.

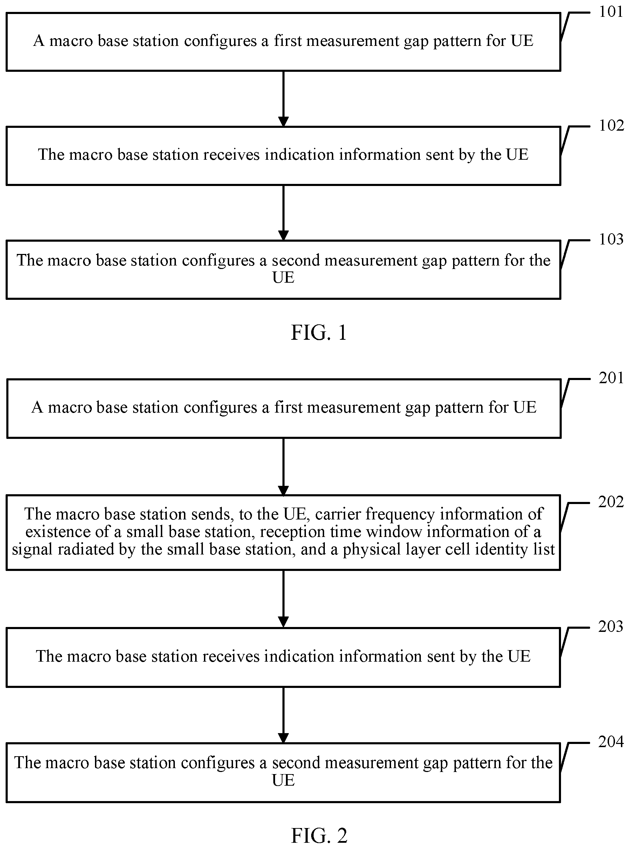

Referring to FIG. 1, an embodiment of a measurement configuration method in the embodiments of the present invention includes:

101: A macro base station configures a first measurement gap pattern for user equipment UE.

When a macro base station provides a service to UE, the macro base station configures a first measurement gap pattern for the UE, so that the UE identifies and measures a small base station that may exist and a small cell of the small base station according to the first measurement gap pattern.

The first measurement gap pattern refers to a data format that is set by the macro base station for suspending data transmission with the UE when the UE identifies and measures a small base station.

102: The macro base station receives indication information sent by the UE.

When a measurement result of the UE meets a condition of reporting a measurement result to the macro base station, that is, when the UE finds through measurement that quality of a received signal radiated by the small base station is higher than or equal to a preset signal quality threshold, the UE sends indication information to the macro base station, and the macro base station receives the indication information sent by the UE.

The indication information may be a simple command, and the command is used to require the macro base station to configure a second measurement gap pattern for the UE; or the indication information includes a measurement result, and when the macro base station receives the indication information, the macro base station configures a second measurement gap pattern for the UE.

103: The macro base station configures a second measurement gap pattern for the UE.

When the macro base station receives the indication information sent by the UE, it indicates that as the UE moves, the UE may be relatively close to the small base station currently, and may desirably receive a signal radiated by the small base station. Therefore, the macro base station configures a second measurement gap pattern for the UE. A measurement gap period in the second measurement gap pattern is less than a measurement gap period in the first measurement gap pattern, that is, the macro base station configures a measurement gap pattern including relatively high measurement frequency for the UE, so that the UE may quickly identify and measure a small cell of the small base station.

Herein, the second measurement gap pattern also refers to a data format that is set by the macro base station for suspending data transmission with the UE when the UE identifies and measures a small base station.

In this embodiment, a macro base station may change a configured measurement gap pattern according to quality of a signal radiated by a small base station and received by UE. When the quality of the radiated signal received by the UE is lower than a preset signal quality threshold, the UE may be relatively far away from the small base station, and the macro base station configures a measurement gap pattern including a relatively long measurement gap period (relatively low measurement frequency) for the UE, which can reduce an effect on a throughput of the macro base station and reduce, for the UE, power consumption for identifying and measuring an inter-frequency cell. When the quality of the radiated signal received by the UE is higher than or equal to a preset signal quality threshold, the UE may be already close to a small cell, and the macro base station configures a measurement gap pattern including a relatively short measurement gap period (relatively high measurement frequency) for the UE, which can ensure that the UE identifies and is connected to the small cell of the small base station in time, and achieve an objective of sharing load in time by using the small cell.

For ease of understanding, the measurement configuration method in the embodiments of the present invention is described below by using a specific example. Referring to FIG. 2, another embodiment of the measurement configuration method according to the embodiments of the present invention includes:

201: A macro base station configures a first measurement gap pattern for user equipment UE.

When a macro base station provides a service to UE, in this case, the UE is relatively close to the macro base station and is relatively far away from a small base station, and the macro base station configures a first measurement gap pattern for the UE, so that the UE identifies and measures a small base station that may exist and a small cell of the small base station according to the first measurement gap pattern.

202: The macro base station sends, to the UE, carrier frequency information used by a small base station, reception time window information of a signal radiated by the small base station, and a physical cell identity list.

To enable the UE to accurately identify and measure a small cell of the small base station, the macro base station sends, to the UE, information such as carrier frequency information used by the small base station, reception time window information of a signal radiated by the small base station, and a physical cell identity (Physical Cell Identity, PCI) list that the UE needs to identify.

The carrier frequency information used by the small base station is used to notify the UE of carrier frequencies used by the small base station currently; the reception time window information of the signal radiated by the small base station includes a size, an initial position or the like of a reception time window, and is used to notify the UE of a time period during which the signal radiated by the small base station is received; and the physical cell identity list is used to notify the UE of an identity of a small cell that is of the small base station and needs to be identified.

203: The macro base station receives indication information sent by the UE.

The UE tunes to a specified carrier frequency according to the carrier frequency information sent by the macro base station, and receives, within a specified time period according to the reception time window information sent by the macro base station, a signal radiated by the small base station. The UE measures quality of the received signal, and when the UE finds through measurement that the quality of the received signal radiated by the small base station is higher than or equal to a preset signal quality threshold, the UE sends indication information to the macro base station, and the macro base station receives the indication information sent by the UE.

The signal radiated by the small base station may be a primary synchronization signal (Primary Synchronization Signal, PSS), a secondary synchronization signal (Secondary Synchronization Signal, SSS) or another pilot signal, and the quality of the signal refers to power or a signal-to-interference-plus-noise ratio of the signal, that is, when the power or the signal-to-interference-plus-noise ratio of the radiated signal received by the UE reaches the preset signal quality threshold, the UE sends the indication information to the macro base station.

The signal quality threshold may be preset by the macro base station, and then notified to the UE by means of broadcasting or by using a radio resource control (Radio Resource Control, RRC) message. Certainly, the signal quality threshold may also be preset by the UE.

The indication information sent by the UE to the macro base station may be a simple command, and the command is used to require the macro base station to configure a second measurement gap pattern for the UE; or the indication information sent by the UE to the macro base station may include a measurement result, and when the macro base station receives the indication information, the macro base station configures a second measurement gap pattern for the UE.

204: The macro base station configures a second measurement gap pattern for the UE.

When the macro base station receives the indication information sent by the UE, it indicates that as the UE moves, the UE may be relatively close to the small base station currently, and may desirably receive a signal radiated by the small base station. Therefore, the macro base station configures a second measurement gap pattern for the UE. A measurement gap period in the second measurement gap pattern is less than a measurement gap period in the first measurement gap pattern, that is, the macro base station configures a measurement gap pattern including relatively high measurement frequency for the UE, so that the UE may quickly identify and measure a small cell of the small base station.

Both the first measurement gap pattern and the second measurement gap pattern in this embodiment refer to a data format that is set by the macro base station for suspending data transmission with the UE when the UE identifies and measures a small base station.

In this embodiment, when a macro base station provides a service to UE, the macro base station sends related information of a small base station to the UE, and the macro base station changes a configured measurement gap pattern according to quality of a signal radiated by the small base station and received by the UE. When the quality of the radiated signal received by the UE is lower than a preset signal quality threshold, the UE may be relatively far away from the small base station, and the macro base station configures a measurement gap pattern including a relatively long measurement gap period (relatively low measurement frequency) for the UE, which can reduce an effect on a throughput of the macro base station and reduce, for the UE, power consumption for identifying and measuring an inter-frequency cell. When the quality of the radiated signal received by the UE is higher than or equal to a preset signal quality threshold, the UE may be already close to a small cell, and the macro base station configures a measurement gap pattern including a relatively short measurement gap period (relatively high measurement frequency) for the UE, which can ensure that the UE identifies and is connected to the small cell of the small base station in time, and achieve an objective of sharing load in time by using the small cell.

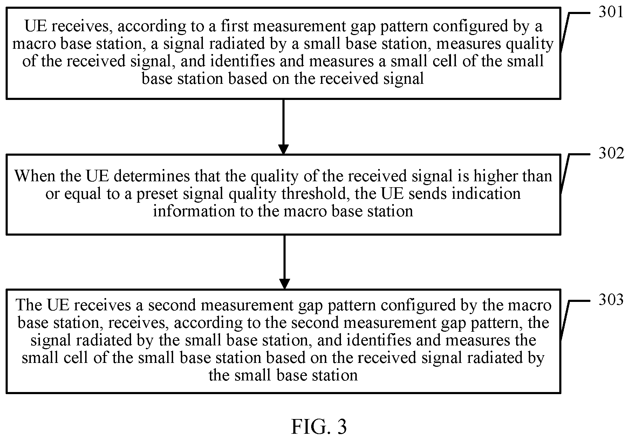

The method for a macro base station to perform measurement configuration for UE is described in the foregoing two embodiments, and a method for UE to identify and measure a small cell of a small base station is described below. First, referring to FIG. 3, an embodiment of an identification and measurement method according to the embodiments of the present invention includes:

301: UE receives, according to a first measurement gap pattern configured by a macro base station, a signal radiated by a small base station, measures quality of the received signal, and identifies and measures a small cell of the small base station based on the received signal.

When a macro base station provides a service to UE, the macro base station configures a first measurement gap pattern for the UE, where the first measurement gap pattern refers to a data format that is set by the macro base station for suspending data transmission with the UE when the UE identifies and measures a small base station.

The UE receives, according to the first measurement gap pattern configured by the macro base station, a signal radiated by the small base station, and identifies and measures, based on the received signal, a small base station that may exist. Herein, the received signal radiated by the small base station may be a PSS signal, an SSS signal or another pilot signal.

302: When the UE determines that the quality of the received signal is higher than or equal to a preset signal quality threshold, the UE sends indication information to the macro base station.

In this embodiment, the signal quality threshold may be preset by the macro base station, and then notified to the UE by means of broadcasting or by using an RRC message, or the signal quality threshold may be preset by the UE according to an actual situation.

After receiving the signal radiated by the small base station, the UE determines whether the quality of the received signal is higher than or equal to a preset signal quality threshold, and if the quality of the received signal is higher than or equal to the preset signal quality threshold, it indicates that the UE is relatively close to the small base station currently, and may desirably receive the signal radiated by the small base station, and the small base station is likely to provide a service.

The UE sends indication information to the macro base station, where the indication information is used to request the macro base station to configure a second measurement gap pattern for the UE, the indication information may be a simple command, and the command is used to require the macro base station to configure a second measurement gap pattern for the UE; or the indication information includes a measurement result, and when the macro base station receives the indication information, the macro base station configures a second measurement gap pattern for the UE.

Specifically, the method for the UE to send the indication information to the macro base station may be implemented by using a protocol data unit (Protocol Data Unit, PDU) of a Media Access Control (Media Access Control, MAC) layer, or implemented by using RRC signaling. An effect of reporting indication information by using a PDU of a MAC layer is more desirable, because a speed of reporting indication information in this manner is faster than that by using RRC signaling.

303: The UE receives a second measurement gap pattern configured by the macro base station, receives, according to the second measurement gap pattern, the signal radiated by the small base station, and identifies and measures the small cell of the small base station based on the received signal radiated by the small base station.

After receiving the indication information sent by the UE, the macro base station configures a second measurement gap pattern for the UE, where a measurement gap period in the second measurement gap pattern is less than a measurement gap period in the first measurement gap pattern.

UE receives a second measurement gap pattern configured by a macro base station, receives, according to the second measurement gap pattern, a signal radiated by a small base station, and identifies and measures a small cell of the small base station based on the received signal. In this embodiment, when the macro base station provides a service to the UE, the UE determines quality of the received signal radiated by the small base station, and when determining that the quality of the received signal is higher than or equal to a preset signal quality threshold, the UE sends indication information to the macro base station, where the indication information is used to request the macro base station to configure a second measurement gap pattern including a relatively short measurement gap period for the UE, to accelerate identification and measurement of the small cell of the small base station, thereby achieving an objective of sharing load for the macro base station in time by using the small cell.

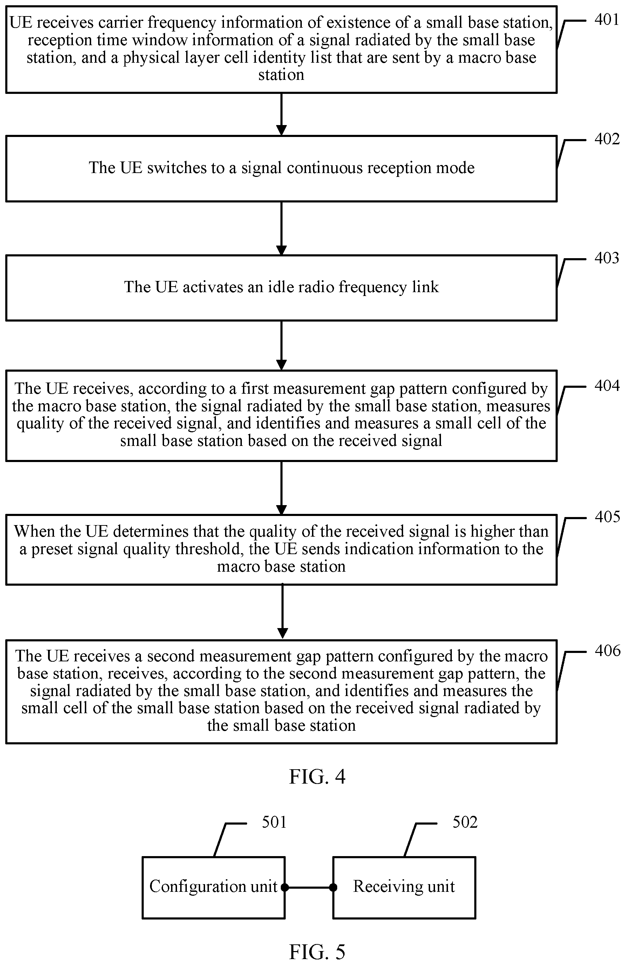

For ease of understanding, the identification and measurement method in the embodiments of the present invention is described below by using a specific example. Referring to FIG. 4, another embodiment of the identification and measurement method in the embodiments of the present invention includes:

401: UE receives carrier frequency information used by a small base station, reception time window information of a signal radiated by the small base station, and a physical cell identity list that are sent by a macro base station.

When the UE enters an area covered by the macro base station, and the macro base station provides a service, to enable the UE to accurately identify and measure the small base station and therefore to achieve an objective of sharing load by the small base station for the macro base station, the macro base station delivers carrier frequency information used by the small base station, reception time window information of a signal radiated by the small base station, a physical cell identity PCI list and the like to the UE, and the UE receives this information sent by the macro base station.

The carrier frequency information used by the small base station is used to notify the UE of carrier frequencies used by the small base station currently, and generally, a carrier frequency used by a small base station is higher than a carrier frequency used by a macro base station. The reception time window information of the signal radiated by the small base station includes a size, an initial position or the like of a reception time window, and is used to notify the UE of a time period during which the signal radiated by the small base station is received. The physical cell identity list is used to notify the UE of an identity of a small cell that is of the small base station and needs to be identified.

402: The UE switches to a signal continuous reception mode.

To reduce power, in a case of only some non-real time applications, the UE generally does not need to ceaselessly monitor downlink data and perform related processing; therefore, the UE is in a signal discontinuous reception (Discontinuous Reception, DRX) mode.

If in this case, the UE is in the signal discontinuous reception mode, after the UE receives this information such as carrier frequency information used by the small base station, reception time window information of a signal radiated by the small base station, and a physical cell identity list that are sent by the macro base station, the UE may immediately switch to a signal continuous reception mode, to accelerate subsequent identification and measurement of a small cell of the small base station.

403: The UE activates an idle radio frequency link.

Further, if there is an idle radio frequency link in this case, after switching to the signal continuous reception mode, the UE may activate the idle radio frequency link, which is dedicated to identification and measurement of a small cell that exists in the small base station. In this case, a service of a current cell is not interrupted.

404: The UE receives, according to a first measurement gap pattern configured by the macro base station, the signal radiated by the small base station, measures quality of the received signal, and identifies and measures a small cell of the small base station based on the received signal.

In this case, the macro base station interrupts the service of the current cell, and the UE receives, according to the first measurement gap pattern configured by the macro base station, the signal radiated by the small base station and measures the quality of the received signal.

Specifically, the UE tunes to a specified carrier frequency (a carrier frequency used by the small base station) according to the received carrier frequency information sent by the macro base station, then receives, at a specified initial position of the specified carrier frequency according to the reception time window information sent by the macro base station, a signal, radiated by the small base station, of a specified time length, measures quality of the received signal, and identifies and measures a small cell of the small base station based on the received signal. The signal radiated by the small base station may be a primary synchronization signal PSS, a secondary synchronization signal SSS or another pilot signal.

405: When the UE determines that the quality of the received signal is higher than a preset signal quality threshold, the UE sends indication information to the macro base station, where the indication information is used to request the macro base station to configure a second measurement gap pattern for the UE.

Herein, the signal quality threshold may be preset by the macro base station according to an actual situation, and is then broadcast to the UE by means of a network or notified to the UE by using an RRC dedicated message. In addition, herein, a signal power threshold may also be preset by the UE.

After receiving a PSS signal, an SSS signal or another pilot radiated by the small base station, the UE determines whether quality of the received signal is higher than or equal to a preset signal quality threshold. Herein, the quality of the signal may refer to power of the received signal, or may refer to a signal-to-interference-plus-noise ratio of the received signal.

When the UE determines that the quality of the received signal is higher than or equal to the preset signal quality threshold, it indicates that as the UE moves, the UE is already close to the small base station. In this case, the UE needs to quickly identify the small base station.

The UE sends indication information to the macro base station, where the indication information is used to request the macro base station to configure a second measurement gap pattern for the UE. A measurement gap period in the second measurement gap pattern is less than a measurement gap period in the first measurement gap pattern, so that measurement frequency can be improved.

The indication information sent by the UE to the macro base station may be a simple command, and the command is used to require the macro base station to configure a second measurement gap pattern for the UE; or the indication information sent by the UE to the macro base station may include a measurement result, and when the macro base station receives the indication information, the macro base station configures a second measurement gap pattern for the UE.

Specifically, the method for the UE to send the indication information to the macro base station may be implemented by using a protocol data unit (Protocol Data Unit, PDU) of a Media Access Control (Media Access Control, MAC) layer, or implemented by using RRC signaling. An effect of reporting indication information by using a PDU of a MAC layer is more desirable, because a speed of reporting indication information in this manner is faster than that by using RRC signaling.

406: The UE receives the second measurement gap pattern configured by the macro base station, receives, according to the second measurement gap pattern, the signal radiated by the small base station, and identifies and measures the small cell of the small base station based on the received signal radiated by the small base station.

The process in which the UE identifies and measures the small cell of the small base station based on the received signal radiated by the small base station is specifically: The UE parses a received PSS signal to obtain a physical cell identity (Identity, ID), then may parse an SSS signal to obtain a group ID of the cell, and may combine the physical layer cell ID and the group ID to obtain a PCI of the current cell. Because each group includes 3 cell IDs, the PCI of the current cell = group ID*3 + cell ID. If the calculated PCI of the current cell is the same as a PCI in a PCI list sent by the macro base station, the current cell is the small cell that the UE needs to identify. After identifying the small cell, the UE measures reference signal received power (Reference Signal Received Power, RSRP) of the identified small cell. When the RSRP of the identified small cell reaches a threshold, the UE reports the identified small cell to the macro base station, and then the macro base station determines whether to hand over the UE to the cell.

The process in which the UE identifies and measures the small cell of the small base station by using different measurement gap patterns is described below by using an example. As shown in Table 2, when the UE determines that the quality of the received signal is higher than or equal to the preset signal quality threshold, that is, the UE is close to the small base station, the UE may use a measurement gap pattern A or B including a relatively short measurement gap period in Table 2, to accelerate identification of the small cell. When the determining result is that the quality of the received signal is lower than the preset signal quality threshold, that is, the UE is relatively far away from the small base station, the UE may use a measurement gap pattern C or D including a relatively long measurement gap period in Table 2, to reduce power consumption.

| Measurement gap pattern identity | Measurement gap length (millisecond) | Measurement gap period (millisecond) | Minimum available time (millisecond) for inter-frequency cell measurement within 480 milliseconds |
|---|---|---|---|
| A | 6 | 10 | 240 |
| B | 6 | 20 | 120 |
| C | 6 | 160 | 15 |
| D | 6 | 240 | 10 |

It can be known from the background that, when the UE is in a signal continuous reception state, a calculation formula of a time for the UE to identify the small cell is as follows:

$$L_{\text{Identify-Inter}} = T_{\text{Basic-Identify-Inter}} * (480/T_{\text{Inter}}) * N_{\text{Freq}}$$

where $T_{\text{Basic-Identify-Inter}}$ is a fixed value and is equal to 480 milliseconds, $T_{\text{Inter}}$ is a minimum available time for inter-frequency cell measurement within 480 milliseconds, and $N_{\text{Freq}}$ is a quantity of network systems in current coverage.

It is assumed that there are 3 network systems in current coverage, that is, $N_{\text{Freq}}$ is equal to 3.

When the UE is close to the small base station, if the UE identifies, by using the measurement gap pattern A, a small cell that exists in the small base station, a needed time is:

$$L_{\text{Identify-Inter}} = T_{\text{Basic-Identify-Inter}} * (480/T_{\text{Inter}}) * N_{\text{Freq}} = 480 * (480/240) * 3$$

$$= 2880 \text{ milliseconds} = 2.88 \text{ seconds}$$

In the prior art, the time needed by the UE to identify, according to the fixed measurement gap pattern 1, the small cell that exists in the small base station is 23.04 seconds; therefore, when the UE is close to the small base station, the identification time is greatly reduced by using the method of this embodiment, and identification efficiency is improved. After identifying the small cell of the small base station, the UE measures the small cell. A specific measurement time is related to a quantity $N_{\text{Freq}}$ of network systems in current coverage, and the measurement of the small cell is mainly measuring whether RSRP of the small cell meets a reporting requirement, and if the RSRP of the small cell meets the reporting requirement, the UE reports a measurement result to the macro base station, and the macro base station determines whether to hand over the UE.

In addition, it should be noted that, in this embodiment, steps 402 and 403 are optional steps. In actual application, whether steps 402 and 403 need to be enabled may be determined according to an actual situation of the UE, and when both steps 402 and 403 need to be enabled, the sequence of steps 402 and 403 is also not limited to the sequence provided in this embodiment.

In this embodiment, when a macro base station provides a service to UE, the UE receives related information that is of a small base station and sent by the macro base station, and switches to a continuous reception mode and activates an idle radio frequency link, which is dedicated to identification and measurement of a small cell; the UE receives, according to a first measurement gap pattern and according to the related information that is of the small base station and provided by the macro base station, a signal radiated by the small base station and measures quality of the received signal; when it is determined that the quality of the received signal is higher than or equal to a preset signal quality threshold, the UE sends indication information to the macro base station, to request the macro base station to configure a second measurement gap pattern including a relatively short measurement gap period for the UE, and then the UE identifies and measures the small cell of the small base station according to the second measurement gap pattern including a relatively short measurement gap period, so as to accelerate identification and measurement of the small cell, thereby achieving an objective of sharing load for the macro base station in time by using the small cell.

The macro base station in the embodiments of the present invention that is used to execute the foregoing measurement configuration method is described below. For a basic logic structure of the macro base station, refer to FIG. 5, and an embodiment of the macro base station in the embodiments of the present invention includes:

a configuration unit 501, configured to configure a first measurement gap pattern for user equipment UE, where the first measurement gap pattern refers to a data format that is set by the macro base station for suspending data transmission with the UE when the UE identifies and measures a small base station; and

a receiving unit 502, configured to receive indication information sent by the UE, where the indication information is used to represent that quality of a signal radiated by the small base station and received by the UE is higher than or equal to a preset signal quality threshold, where the quality of the signal radiated by the small base station is obtained through measurement by the UE according to the first measurement gap pattern, where the configuration unit 501 is further configured to: after the receiving unit 502 receives the indication information sent by the UE, configure a second measurement gap pattern for the UE, where a measurement gap period in the second measurement gap pattern is less than a measurement gap period in the first measurement gap pattern, and the second measurement gap pattern also refers to a data format that is set by the macro base station for suspending data transmission with the UE when the UE identifies and measures a small base station.

In this embodiment, a macro base station may change a configured measurement gap pattern according to quality of a radiated signal received by UE. When the quality of the radiated signal received by the UE is lower than a preset signal quality threshold, the UE may be relatively far away from a small base station, and a configuration unit configures a measurement gap pattern including a relatively long measurement gap period (relatively low measurement frequency) for the UE, which can reduce an effect on a throughput of the macro base station and reduce, for the UE, power consumption for identifying and measuring an inter-frequency cell. When the quality of the radiated signal received by the UE is higher than or equal to a preset signal quality threshold, the UE may be already close to a small cell, and the configuration unit configures a measurement gap pattern including a relatively short measurement gap period (relatively high measurement frequency) for the UE, which can ensure that the UE identifies and is connected to the small cell of the small base station in time, and achieve an objective of sharing load in time by using the small cell.

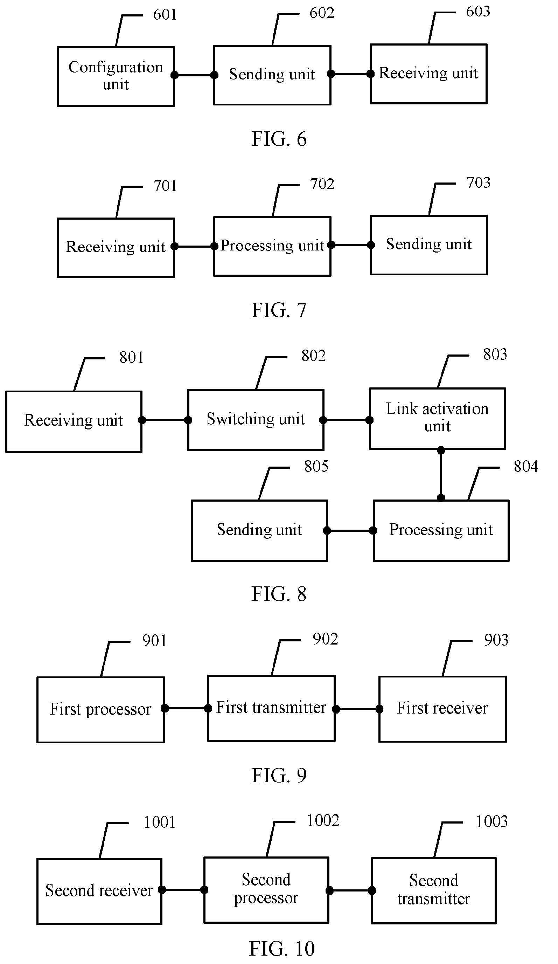

For ease of understanding, the macro base station in the embodiments of the present invention is described below by using a specific example. Referring to FIG. 6, another embodiment of the macro base station in the embodiments of the present invention includes:

a configuration unit 601, configured to configure a first measurement gap pattern for user equipment UE, where the first measurement gap pattern refers to a data format that is set by the macro base station for suspending data transmission with the UE when the UE identifies and measures a small base station; and

a sending unit 602, configured to send, to the UE, carrier frequency information used by the small base station, reception time window information of a signal radiated by the small base station, and a physical cell identity list; and

a receiving unit 603, configured to receive indication information sent by the UE, where the indication information is used to represent that quality of a signal radiated by the small base station and received by the UE is higher than or equal to a preset signal quality threshold, where the quality of the signal radiated by the small base station is obtained through measurement by the UE according to the first measurement gap pattern, and the quality of the signal refers to power or a signal-to-interference-plus-noise ratio of the signal, where

the configuration unit 601 is further configured to: after the receiving unit 603 receives the indication information sent by the UE, configure a second measurement gap pattern for the UE, where a measurement gap period in the second measurement gap pattern is less than a measurement gap period in the first measurement gap pattern.

In this embodiment, when a macro base station provides a service to UE, that is, in this case, the UE is relatively close to the macro base station and relatively far away from a small base station, a configuration unit configures a first measurement gap pattern for the UE, so that the UE identifies and measures a small base station that may exist and a small cell of the small base station according to the first measurement gap pattern, to reduce power consumption. Also, to enable the UE to accurately measure the small cell of the small base station, a sending unit sends, to the UE, information such as carrier frequency information used by the small base station, reception time window information of a signal radiated by the small base station, and a physical cell identity list. When a measurement result of the UE meets a condition of reporting a measurement result to the macro base station, that is, when the UE finds through measurement that quality of the received signal radiated by the small base station is higher than or equal to a preset signal quality threshold, the UE sends indication information to the macro base station, and the receiving unit receives the indication information sent by the UE. The configuration unit configures a second measurement gap pattern for the UE. A measurement gap period in the second measurement gap pattern is less than a measurement gap period in the first measurement gap pattern, that is, the configuration unit configures a measurement gap pattern including relatively high measurement frequency for the UE, so that the UE may quickly identify and measure the small cell of the small base station.

The user equipment UE in the embodiments of the present invention that is used to execute the foregoing identification and measurement method is described below. For a basic logical structure of the UE, refer to FIG. 7, and an embodiment of the UE in the embodiments of the present invention includes:

a receiving unit 701, configured to receive, according to a first measurement gap pattern configured by a macro base station, a signal radiated by a small base station;

a processing unit 702, configured to measure quality of the signal received by the receiving unit 701, and identify and measure a small cell of the small base station based on the signal received by the receiving unit 701; and

a sending unit 703, configured to: when the processing unit 702 determines that the quality of the received signal is higher than or equal to a preset signal quality threshold, send indication information to the macro base station, to request the macro base station to configure a second measurement gap pattern for the UE, where a measurement gap period in the second measurement gap pattern is less than a measurement gap period in the first measurement gap pattern, where

the receiving unit 701 is further configured to receive the second measurement gap pattern configured by the macro base station, and receive, according to the second measurement gap pattern, the signal radiated by the small base station; and

the processing unit 702 is further configured to identify and measure the small cell of the small base station based on the signal received, according to the second measurement gap pattern, by the receiving unit 701.

In this embodiment, when a macro base station provides a service to UE, a receiving unit receives, according to a first measurement gap pattern configured by the macro base station, a signal radiated by a small base station, and a processing unit measures quality of the received signal, and identifies and measures, based on the signal received by the receiving unit, a small base station that may exist. When the processing unit determines that the quality of the received signal is higher than or equal to a preset signal quality threshold, a sending unit sends indication information to the macro base station, where the indication information is used to request the macro base station to configure a second measurement gap pattern for the UE, and a measurement gap period in the second measurement gap pattern is less than a measurement gap period in the first measurement gap pattern. Specifically, the indication information sent by the sending unit may be implemented by using a protocol data unit (Protocol Data Unit, PDU) of a Media Access Control (Media Access Control, MAC) layer, or implemented by using RRC signaling. An effect of sending indication information by using a PDU of a MAC layer is more desirable, because a speed of reporting indication information in this manner is faster than that by using RRC signaling. After the macro base station configures the second measurement gap pattern for the UE, the receiving unit receives, according to the second measurement gap pattern, the signal radiated by the small base station, and the processing unit identifies and measures a small cell of the small base station based on the received signal.

For ease of understanding, the UE in the embodiments of the present invention is described by using a specific example. Referring to FIG. 8, another embodiment of the UE in the embodiments of the present invention includes:

a receiving unit 801, configured to receive carrier frequency information used by a small base station, reception time window information of a signal radiated by the small base station, and a physical cell identity list that are sent by a macro base station, and the signal radiated by the small base station;
a switching unit 802, configured to switch from a signal discontinuous reception mode to a signal continuous reception mode;
a link activation unit 803, configured to activate an idle radio frequency link, to identify and measure a small cell that exists in the small base station, where
the receiving unit 801 is further configured to receive, according to a first measurement gap pattern configured by the macro base station, the signal radiated by the small base station;
a processing unit 804, configured to measure quality of the signal received by the receiving unit 801, and identify and measure the small cell of the small base station based on the signal received by the receiving unit 801; and
a sending unit 805, configured to: when the processing unit 804 determines that the quality of the received signal is higher than or equal to a preset signal quality threshold, send indication information to the macro base station, to request the macro base station to configure a second measurement gap pattern for the UE, where a measurement gap period in the second measurement gap pattern is less than a measurement gap period in the first measurement gap pattern, where
the receiving unit 801 is further configured to receive the second measurement gap pattern configured by the macro base station, and receive, according to the second measurement gap pattern, the signal radiated by the small base station; and the processing unit 804 is further configured to identify and measure the small cell of the small base station based on the signal received, according to the second measurement gap pattern, by the receiving unit 801.

For ease of understanding, interaction manners between units of the UE in this embodiment are described below by using an actual application scenario.

When the UE enters an area covered by the macro base station, and the macro base station provides a service, to enable the UE to accurately identify and measure the small cell of the small base station, the macro base station delivers carrier frequency information used by the small base station, reception time window information of a signal radiated by the small base station, a physical cell identity list and the like to the UE, and the receiving unit 801 receives this information sent by the macro base station.

The carrier frequency information used by the small base station is used to notify the UE of carrier frequencies used by the small base station currently, and generally, a carrier frequency used by a small base station is higher than a carrier frequency used by a macro base station. The reception time window information of the signal radiated by the small base station includes a size, an initial position or the like of a reception time window, and is used to notify the UE of a time period during which the signal radiated by the small base station is received. The physical cell identity list is used to notify the UE of an identity of a small cell that is of the small base station and needs to be identified.

To reduce power, in a case of only some non-real time applications, the UE generally does not need to ceaselessly monitor downlink data and perform related processing; therefore, the UE is in a signal discontinuous reception (Discontinuous Reception, DRX) mode.

If in this case, the UE is in the signal discontinuous reception mode, after the receiving unit 801 receives this information such as carrier frequency information used by the small base station, reception time window information of a signal radiated by the small base station, and a physical cell identity list that are sent by the macro base station, the switching unit 802 may immediately switch to a signal continuous reception mode, to accelerate subsequent identification and measurement of the small cell of the small base station.

Further, if there is an idle radio frequency link in this case, after the switching unit 802 switches to a signal continuous reception mode, the link activation unit 803 may activate the idle radio frequency link, which is dedicated to identification and measurement of a small cell that exists in the small base station. In this case, the macro base station interrupts a service of a current cell.

After the link activation unit 803 activates the idle radio frequency link, the macro base station may interrupt the service of the current cell, and the receiving unit 801 receives, according to the first measurement gap pattern configured by the macro base station, a signal radiated by the small base station. The processing unit 804 measures quality of the signal received by the receiving unit 801.

Specifically, the receiving unit 801 tunes to a specified carrier frequency (a carrier frequency used by the small base station) according to the received carrier frequency information sent by the macro base station, then receives, at a specified initial position of the specified carrier frequency according to the reception time window information sent by the macro base station, a signal, radiated by the small base station, of a specified time length, and the processing unit 804 measures quality of the signal received by the receiving unit 801, and identifies and measures the small cell of the small base station based on the received signal. The signal radiated by the small base station may be a primary synchronization signal PSS, a secondary synchronization signal SSS or another pilot signal.

When the processing unit 804 determines that the quality of the signal received by the receiving unit 801 is higher than or equal to the preset signal quality threshold, it indicates that as the UE moves, the UE is already close to the small base station. In this case, the processing unit 804 needs to quickly identify the small base station.

The sending unit 805 sends indication information to the macro base station, where the indication information is used to request the macro base station to configure a second measurement gap pattern for the UE, and a measurement gap period in the second measurement gap pattern is less than a measurement gap period in the first measurement gap pattern.

Herein, the quality of the signal may refer to power of the received signal, or may refer to a signal-to-interference-plus-noise ratio of the received signal. Herein, the signal quality threshold may be preset by the macro base station according to an actual situation, and is then broadcast to the processing unit 804 by means of a network, or notified to the processing unit 804 by using an RRC dedicated message. In addition, herein, a signal power threshold may also be preset by the processing unit 804.

The indication information sent by the sending unit 805 to the macro base station may be a simple command, and the command is used to require the macro base station to configure a second measurement gap pattern for the UE; or the indication information sent by the UE to the macro base station may include a measurement result, and when the macro base station receives the indication information, the macro base station configures a second measurement gap pattern for the UE.

Specifically, that the sending unit 805 sends indication information to the macro base station may be implemented by using a protocol data unit (Protocol Data Unit, PDU) of a Media Access Control (Media Access Control, MAC) layer, or may be implemented by using RRC signaling. The speed of sending indication information by using a PDU of a MAC layer is faster.

The receiving unit 801 receives the second measurement gap pattern configured by the macro base station, and receives, according to the second measurement gap pattern, the signal radiated by the small base station, and the processing unit 804 identifies and measures the small cell of the small base station based on the signal that is radiated by the small base station and received, according to the second measurement gap pattern, by the receiving unit 801.

The process in which the processing unit 804 identifies and measures the small cell of the small base station based on the received signal radiated by the small base station is specifically: the processing unit 804 parses a received PSS signal to obtain a physical cell identity (Identity, ID), then may parse an SSS signal to obtain a group ID of the cell, and may combine the physical layer cell ID and the group ID to obtain a PCI of the current cell. Because each group includes 3 cell IDs, the PCI of the current cell = group ID*3 + cell ID. If the calculated PCI of the current cell is the same as a PCI in a PCI list sent by the macro base station, the current cell is the small cell that the UE needs to identify. A time length for the processing unit 804 to identify the small cell depends on a measurement gap period in a measurement gap pattern.

After identifying the small cell, the processing unit 804 measures reference signal receive power (Reference Signal Received Power, RSRP) of the identified small cell. When the RSRP of the identified small cell reaches a threshold, the sending unit 805 reports the identified small cell to the macro base station, and then the macro base station determines whether to hand over the UE to the cell. A time length for measurement of the small cell depends on a quantity $N_{Freq}$ of network systems in current coverage.

In this embodiment, when a macro base station provides a service to UE, a receiving unit receives related information that is of a small base station and sent by the macro base station, a switching unit switches to a signal continuous reception mode, and a link activation unit activates an idle radio frequency link, which is dedicated to identification and measurement of a small cell; then the receiving unit receives, according to a first measurement gap pattern configured by the macro base station, a signal radiated by the small base station, a processing unit measures quality of the received signal; when it is determined that the quality of the received signal is higher than or equal to a preset signal quality threshold, a sending unit sends indication information to the macro base station, where the indication information is used to request the macro base station to configure a second measurement gap pattern including a relatively short measurement gap period for the UE, then the processing unit identifies and measures the small cell of the small base station according to the second measurement gap pattern including a relatively short measurement gap period, so as to accelerate identification and measurement of the small cell, thereby achieving an objective of sharing load for the macro base station in time by using the small cell.

The macro base station in the embodiments of the present invention is further described below. Referring to FIG. 9, another embodiment of the macro base station in the embodiments of the present invention includes:

a first processor 901, configured to configure a first measurement gap pattern for user equipment UE, where the first measurement gap pattern refers to a data format that is set by the macro base station for suspending data transmission with the UE when the UE identifies and measures a small base station;

a first transmitter 902, configured to send, to the UE, carrier frequency information used by the small base station, reception time window information of a signal radiated by the small base station, and a physical cell identity list; and

a first receiver 903, configured to receive indication information sent by the UE, where the indication information is used to represent that quality of a signal radiated by the small base station and received by the UE is higher than or equal to a preset signal quality threshold, where the quality of the signal radiated by the small base station is obtained through measurement by the UE according to the first measurement gap pattern, where

the first processor 901 is further configured to: after the first receiver 903 receives the indication information sent by the UE, configure a second measurement gap pattern for the UE, where a measurement gap period in the second measurement gap pattern is less than a measurement gap period in the first measurement gap pattern.

The foregoing signal refers to a PSS signal, an SSS signal or another pilot signal, and the quality of the signal refers to power or a signal-to-interference-plus-noise ratio of the received signal.

The UE in the embodiments of the present invention is further described below. Referring to FIG. 10, another embodiment of the UE in the embodiments of the present invention includes:

a second receiver 1001, configured to receive, according to a first measurement gap pattern configured by a macro base station, a signal radiated by a small base station;

a second processor 1002, configured to measure quality of the signal received by the second receiver 1001, and identify and measure a small cell of the small base station based on the signal received by the second receiver 1001; and

a second transmitter 1003, configured to: when the second processor 1002 determines that the quality of the received signal is higher than or equal to a preset signal quality threshold, send indication information to the macro base station, where the indication information is used to request the macro base station to configure a second measurement gap pattern for the UE, and a measurement gap period in the second measurement gap pattern is less than a measurement gap period in the first measurement gap pattern, where

the second receiver 1001 is further configured to receive the second measurement gap pattern configured by the macro base station, and receive, according to the second measurement gap pattern, the signal radiated by the small base station; and

the second processor 1002 is further configured to identify and measure the small cell of the small base station based on the signal received, according to the second measurement gap pattern, by the second receiver 1001.

In addition, the second receiver 1001 in this embodiment is further configured to: before receiving, according to the first measurement gap pattern configured by the macro base station, the signal radiated by a small base station, receive carrier frequency information used by the small base station, reception time window information of the signal radiated by the small base station, and a physical cell identity list that are sent by the macro base station.

The second processor 1002 is further configured to: before the second receiver 1001 receives, according to a first measurement gap pattern configured by the macro base station, the signal radiated by the small base station, switch to a signal continuous reception mode and activate an idle radio frequency link, to identify and measure the small cell of the small base station.

In this embodiment, the received signal radiated by the small base station is a primary synchronization signal PSS, a secondary synchronization signal SSS or another pilot signal; the quality of the signal refers to power or a signal-to-interference-plus-noise ratio of the signal; and the signal quality threshold may be set by the macro base station and notified to the UE by means of broadcasting or by using a radio resource control RRC dedicated message, or is set by the UE.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A measurement configuration method, comprising:

   configuring (101), by a macro base station, a first measurement gap pattern for user equipment, UE, wherein the first measurement gap pattern refers to a data format that is set by the macro base station for suspending data transmission with the UE when the UE identifies and measures a small base station;
   receiving (102), by the macro base station, indication information sent by the UE, wherein the indication information is used to represent that quality of a signal radiated by the small base station and received by the UE is higher than or equal to a preset signal quality threshold, wherein the quality of the signal radiated by the small base station is obtained through measurement by the UE according to the first measurement gap pattern; and
   configuring (103), by the macro base station, a second measurement gap pattern for the UE, wherein a measurement gap period in the second measurement gap pattern is less than a measurement gap period in the first measurement gap pattern;
   wherein before the receiving, by the macro base station, indication information sent by the UE, the method further comprises:
   sending (202), by the macro base station to the UE, carrier frequency information used by the small base station, reception time window information of the signal radiated by the small base station, and a physical cell identity list.

2. The method according to claim 1, wherein the quality of the signal refers to power or a signal-to-interference-plus-noise ratio of the received signal.

3. An identification and measurement method, comprising:

   receiving (301), by user equipment, UE, according to a first measurement gap pattern configured by a macro base station, a signal radiated by a small base station, measuring quality of the signal, and identifying and measuring a small cell of the small base station based on the signal;
   when the UE determines that the quality of the signal is higher than or equal to a preset signal quality threshold, sending (302), by the UE, indication information to the macro base station, wherein the indication information is used to request the macro base station to configure a second measurement gap pattern for the UE, and a measurement gap period in the second measurement gap pattern is less than a measurement gap period in the first measurement gap pattern; and
   receiving (303), by the UE, the second measurement gap pattern configured by the macro base station, receiving, according to the second measurement gap pattern, the signal radiated by the small base station, and identifying and measuring the small cell of the small base station based on the received signal radiated by the small base station;
   wherein before the receiving, by UE according to a first measurement gap pattern configured by a macro base station, a signal radiated by a small base station, the method further comprises:

      receiving (401), by the UE, carrier frequency information used by the small base station, reception time

15

window information of the signal radiated by the small base station, and a physical cell identity list that are sent by the macro base station; and
wherein before the receiving, by UE according to a first measurement gap pattern configured by a macro base station, a signal radiated by a small base station, the method further comprises:

switching (402), by the UE, to a signal continuous reception mode; and
activating (403), by the UE, an idle radio frequency link, to identify and measure the small cell of the small base station.

4. The method according to claim 3, wherein the quality of the signal refers to power or a signal-to-interference-plus-noise ratio of the signal.

5. The method according to claim 4, wherein the signal quality threshold is set by the macro base station and notified to the UE by means of broadcasting or by using a radio resource control RRC dedicated message, or is set by the UE.

6. A macro base station, comprising:

a configuration unit (501), configured to configure a first measurement gap pattern for user equipment, UE, wherein the first measurement gap pattern refers to a data format that is set by the macro base station for suspending data transmission with the UE when the UE identifies and measures a small base station; and
a receiving unit (502), configured to receive indication information sent by the UE, wherein the indication information is used to represent that quality of a signal radiated by the small base station and received by the UE is higher than or equal to a preset signal quality threshold, wherein the quality of the signal radiated by the small base station is obtained through measurement by the UE according to the first measurement gap pattern, wherein the configuration unit is further configured to: after the receiving unit receives the indication information sent by the UE, configure a second measurement gap pattern for the UE, wherein a measurement gap period in the second measurement gap pattern is less than a measurement gap period in the first measurement gap pattern; wherein the macro base station further comprises:
a sending unit (602), configured to send, to the UE, carrier frequency information used by the small base station, reception time window information of the signal radiated by the small base station, and a physical cell identity list.

7. The macro base station according to claim 6, wherein the quality of the signal refers to power or a signal-to-interference-plus-noise ratio of the received signal.

8. User equipment, UE, comprising:

a receiving unit (701), configured to receive, according to a first measurement gap pattern configured by a macro base station, a signal radiated by a small base station;
a processing unit (702), configured to measure quality of the signal received by the receiving unit, and identify and measure a small cell of the small base station based on the signal received by the receiving unit; and
a sending unit (703), configured to: when the processing unit determines that the quality of the signal is higher than or equal to a preset signal quality threshold, send indication information to the macro base station, wherein the indication information is used to request the macro base station to configure a second measurement gap pattern for the UE, and a measurement gap period in the second measurement gap pattern is less than a measurement gap period in the first measurement gap pattern, wherein
the receiving unit is further configured to receive the second measurement gap pattern configured by the macro base station, and receive, according to the second measurement gap pattern, the signal radiated by the small base station; and
the processing unit is further configured to identify and measure the small cell of the small base station based on the signal received, according to the second measurement gap pattern, by the receiving unit;
wherein before receiving, according to the first measurement gap pattern configured by the macro base station, the signal radiated by the small base station, the receiving unit is further configured to:

receive carrier frequency information used by the small base station, reception time window information of the signal radiated by the small base station, and a physical cell identity list that are sent by the macro base station; and
wherein the UE further comprises:

a switching unit (802), configured to: before the receiving unit receives, according to the first measurement gap pattern configured by the macro base station, the signal radiated by the small base station, switch from a signal discontinuous reception mode to a signal continuous reception mode; and

a link activation unit (803), configured to: before the receiving unit receives, according to the first measurement gap pattern configured by the macro base station, the signal radiated by the small base station, activate an idle radio frequency link, to identify and measure the small cell of the small base station.

9. The UE according to claim 8, wherein the signal is a primary synchronization signal, PSS, a secondary synchronization signal, SSS, or another pilot signal.

10. The UE according to claim 8 or 9, wherein the quality of the signal refers to power or a signal-to-interference-plus-noise ratio of the signal.

11. The UE according to any one of claims 8 to 10, wherein the signal quality threshold is set by the macro base station and notified to the UE by means of broadcasting or by using a radio resource control, RRC, dedicated message, or is set by the UE.

**Patentansprüche**

1. Messkonfigurationsverfahren, Folgendes umfassend:

Konfigurieren (101), durch eine Makrobasisstation, eines ersten Messabstandmusters für ein Benutzergerät ("user equipment", UE), wobei sich das erste Messabstandmuster auf ein Datenformat bezieht, das durch die Makrobasisstation zur Suspendierung der Datenübertragung mit dem UE festgelegt wird, wenn das UE eine kleine Basisstation identifiziert und misst;
Empfangen (102), durch die Makrobasisstation, von durch das UE gesendeten Meldungsinformationen, wobei die Meldungsinformationen dazu genutzt werden, darzustellen, dass die Qualität eines von der kleinen Basisstation ausgestrahlten und von dem UE empfangenen Signals höher oder gleich einer voreingestellten Signalqualitätschwelle ist, wobei die Qualität des von der kleinen Basisstation ausgestrahlten Signals durch Messung durch das UE gemäß dem ersten Messabstandmuster erlangt wird; und
Konfigurieren (103), durch die Makrobasisstation, eines zweiten Messabstandmusters für das UE, wobei eine Messabstanddauer im zweiten Messabstandmuster kleiner als eine Messabstanddauer im ersten Messabstandmuster ist;
wobei das Verfahren, vor dem Empfangen von durch das UE gesendeten Meldungsinformationen durch die Makrobasisstation, außerdem Folgendes umfasst:
Senden (202), durch die Makrobasisstation an das UE, von durch die kleine Basisstation genutzten Trägerfrequenzinformationen, Empfangszeitfensterinformationen des von der kleinen Basisstation ausgestrahlten Signals, sowie einer Identitätenliste physischer Zellen.

2. Verfahren nach Anspruch 1, wobei sich die Qualität des Signals auf Stärke oder ein Signal-zu-Interferenz-plus-Rausch-Verhältnis des empfangenen Signals bezieht.

3. Identifizierungs- und Messverfahren, Folgendes umfassend:

Empfangen (301), durch ein Benutzergerät, UE, gemäß einem durch eine Makrobasisstation konfigurierten ersten Messabstandmuster, eines von einer kleinen Basisstation ausgestrahlten Signals, Messen der Qualität des Signals, sowie, basierend auf dem Signal, Identifizieren und Messen einer kleinen Zelle der kleinen Basisstation;
wenn das UE ermittelt, dass die Qualität des Signals höher oder gleich einer voreingestellten Signalqualitätschwelle ist, Senden (302), durch das UE, von Meldungsinformationen an die Makrobasisstation, wobei die Meldungsinformationen dazu genutzt werden, die Makrobasisstation aufzufordern, für das UE ein zweites Messabstandmuster zu konfigurieren, und wobei eine Messabstanddauer im zweiten Messabstandmuster kleiner als eine Messabstanddauer im ersten Messabstandmuster ist; und
Empfangen (303), durch das UE, des von der Makrobasisstation konfigurierten zweiten Messabstandmusters, Empfangen, gemäß dem zweiten Messabstandmuster, des von der kleinen Basisstation ausgestrahlten Signals, sowie Identifizieren und Messen der kleinen Zelle der kleinen Basisstation, basierend auf dem empfangenen Signal, das von der kleinen Basisstation ausgestrahlt wird;

wobei, vor dem Empfangen eines von einer kleinen Basisstation ausgestrahlten Signals durch das UE gemäß einem durch eine Makrobasisstation konfigurierten ersten Messabstandmuster, das Verfahren außerdem Folgendes umfasst:

Empfangen (401), durch das UE, von durch die kleine Basisstation genutzten Trägerfrequenzinformationen, Empfangszeitfensterinformationen des von der kleinen Basisstation ausgestrahlten Signals, sowie einer Identitätenliste physischer Zellen, die durch die Makrobasisstation gesendet werden; und

wobei, vor dem Empfangen eines von einer kleinen Basisstation ausgestrahlten Signals durch das UE gemäß einem durch eine Makrobasisstation konfigurierten ersten Messabstandmuster, das Verfahren außerdem Folgendes umfasst:

Umschalten (402), durch das UE, in einen kontinuierlichen Signalempfangsmodus; und

Aktivieren (403), durch das UE, einer inaktiven Funkfrequenzverbindung, um die kleine Zelle der kleinen Basisstation zu identifizieren und zu messen.

4. Verfahren nach Anspruch 3, wobei sich die Qualität des Signals auf Stärke oder ein Signal-zu-Interferenz-plus-Rausch-Verhältnis des Signals bezieht.

5. Verfahren nach Anspruch 4, wobei die Signalqualitätschwelle durch die Makrobasisstation festgelegt und an das UE mittels Übertragung oder durch Nutzung einer dedizierten Nachricht zur Funkressourcensteuerung ("radio resource control", RRC) mitgeteilt wird, oder durch das UE festgelegt wird.

6. Makrobasisstation, Folgendes umfassend:

eine Konfigurationseinheit (501), die dafür eingerichtet ist, ein erstes Messabstandmuster für ein Benutzergerät, UE, zu konfigurieren, wobei sich das erste Messabstandmuster auf ein Datenformat bezieht, das durch die Makrobasisstation zur Suspendierung der Datenübertragung mit dem UE festgelegt wird, wenn das UE eine kleine Basisstation identifiziert und misst; und

eine Empfangseinheit (502), die dafür eingerichtet ist, durch das UE gesendete Meldungsinformationen zu empfangen, wobei die Meldungsinformationen dazu genutzt werden, darzustellen, dass die Qualität eines von der kleinen Basisstation ausgestrahlten und von dem UE empfangenen Signals höher oder gleich einer voreingestellten Signalqualitätschwelle ist, wobei die Qualität des von der kleinen Basisstation ausgestrahlten Signals durch Messung durch das UE gemäß dem ersten Messabstandmuster erlangt wird; wobei

die Konfigurationseinheit außerdem für Folgendes eingerichtet ist: nachdem die Empfangseinheit die vom UE gesendeten Meldungsinformationen empfängt, ein zweites Messabstandmuster für das UE zu konfigurieren, wobei eine Messabstanddauer im zweiten Messabstandmuster kleiner als eine Messabstanddauer im ersten Messabstandmuster ist;

wobei die Makrobasisstation außerdem Folgendes umfasst:

eine Sendeeinheit (602), die dafür eingerichtet ist, durch die kleine Basisstation genutzte Trägerfrequenzinformationen, Empfangszeitfensterinformationen des von der kleinen Basisstation ausgestrahlten Signals, sowie eine Identitätenliste physischer Zellen an das UE zu senden.

7. Makrobasisstation nach Anspruch 6, wobei sich die Qualität des Signals auf Stärke oder ein Signal-zu-Interferenz-plus-Rausch-Verhältnis des empfangenen Signals bezieht.

8. Benutzergerät, UE, Folgendes umfassend:

eine Empfangseinheit (701), die dafür eingerichtet ist, ein von einer kleinen Basisstation ausgestrahltes Signal gemäß einem durch eine Makrobasisstation konfigurierten ersten Messabstandmuster zu empfangen;

eine Verarbeitungseinheit (702), die dafür eingerichtet ist, die Qualität des von der Empfangseinheit empfangenen Signals zu messen, und eine kleine Zelle der kleinen Basisstation, basierend auf dem von der Empfangseinheit empfangenen Signal, zu identifizieren und zu messen; und

eine Sendeeinheit (703), die für Folgendes eingerichtet ist: wenn die Verarbeitungseinheit ermittelt, dass die Qualität des Signals höher oder gleich einer voreingestellten Signalqualitätschwelle ist, Senden von Meldungsinformationen an die Makrobasisstation, wobei die Meldungsinformationen dazu genutzt werden, die Makrobasisstation aufzufordern, für das UE ein zweites Messabstandmuster zu konfigurieren, und wobei eine Messabstanddauer im zweiten Messabstandmuster kleiner als eine Messabstanddauer im ersten Messabstandmuster ist; wobei die Empfangseinheit außerdem dafür eingerichtet ist, das zweite durch die Makrobasisstation konfigurierte Messabstandmuster zu empfangen, sowie das von der kleinen Basisstation ausgestrahlte Signal gemäß dem zweiten Messabstandmuster zu empfangen; und

die Verarbeitungseinheit außerdem dafür eingerichtet ist, die kleine Zelle der kleinen Basisstation basierend auf dem von der Empfangseinheit empfangenen Signal gemäß dem zweiten Messabstandmuster zu identifizieren und zu messen;

wobei, vor dem Empfangen des von der kleinen Basisstation ausgestrahlten Signals gemäß dem durch die Makrobasisstation konfigurierten ersten Messabstandmuster, die Empfangseinheit außerdem für Folgendes eingerichtet ist:

Empfangen von durch die kleine Basisstation genutzten Trägerfrequenzinformationen, Empfangszeitfensterinformationen des von der kleinen Basisstation ausgestrahlten Signals, sowie einer Identitätenliste physischer Zellen, die durch die Makrobasisstation gesendet werden; und

wobei das UE außerdem Folgendes umfasst:

eine Umschalteinheit (802), die für Folgendes eingerichtet ist: bevor die Empfangseinheit das von der kleinen Basisstation ausgestrahlte Signal gemäß dem von der Makrobasisstation konfigurierten ersten Messabstandmuster empfängt, Umschalten von einem diskontinuierlichen Signalempfangsmodus in einen kontinuierlichen Signalempfangsmodus; und

eine Verbindungsaktivierungseinheit (803), die für Folgendes eingerichtet ist: bevor die Empfangseinheit das von der kleinen Basisstation ausgestrahlte Signal gemäß dem von der Makrobasisstation konfigurierten ersten Messabstandmuster empfängt, Aktivieren einer inaktiven Funkfrequenzverbindung, um die kleine Zelle der kleinen Basisstation zu identifizieren und zu messen.

9. UE nach Anspruch 8, wobei es sich bei dem Signal um ein primäres Synchronisationssignal, PSS, ein sekundäres Synchronisationssignal, SSS, oder um ein anderes Pilotsignal handelt.

10. UE nach Anspruch 8 oder 9, wobei sich die Qualität des Signals auf Stärke oder ein Signal-zu-Interferenz-plus-Rausch-Verhältnis des Signals bezieht.

11. UE nach einem der Ansprüche 8 bis 10, wobei die Signalqualitätschwelle durch die Makrobasisstation festgelegt und an das UE mittels Übertragung oder durch Nutzung einer dedizierten Nachricht zur Funkressourcensteuerung ("radio resource control", RRC) mitgeteilt wird, oder durch das UE festgelegt wird.

**Revendications**

1. Procédé de configuration de mesure, comprenant :

la configuration (101), par une macro station de base, d'un premier schéma d'écart de mesure pour un équipement utilisateur, UE, dans lequel le premier schéma d'écart de mesure fait référence à un format de données qui est fixé par la macro station de base pour suspendre une transmission de données avec l'UE lorsque l'UE identifie et mesure une petite station de base ;

la réception (102), par la macro station de base, d'informations d'indication envoyées par l'UE, dans lequel les informations d'indication sont utilisées pour signaler qu'une qualité d'un signal émis par la petite station de base et reçu par l'UE est supérieure ou égale à un seuil de qualité de signal préétabli, dans lequel la qualité du signal émis par la petite station de base est obtenue par le biais d'une mesure par l'UE selon le premier schéma d'écart de mesure ; et

la configuration (103), par la macro station de base, d'un second schéma d'écart de mesure pour l'UE, dans lequel une période d'écart de mesure dans le second schéma d'écart de mesure est inférieure à une période d'écart de mesure dans le premier schéma d'écart de mesure ;

dans lequel avant la réception, par la macro station de base, d'informations d'indication envoyées par l'UE, le procédé comprend en outre :

l'envoi (202), par la macro station de base à l'UE, d'informations de fréquence porteuse utilisées par la petite station de base, d'informations de fenêtre temporelle de réception du signal émis par la petite station de base, et d'une liste d'identités de cellules physiques.

2. Procédé selon la revendication 1, dans lequel la qualité du signal fait référence à la puissance ou un rapport signal sur interférence plus bruit du signal reçu.

**3.** Procédé d'identification et de mesure, comprenant :

la réception (301), par un équipement utilisateur, UE, selon un premier schéma d'écart de mesure configuré par une macro station de base, d'un signal émis par une petite station de base, la mesure d'une qualité du signal, et l'identification et la mesure d'une petite cellule de la petite station de base d'après le signal ;
lorsque l'UE détermine que la qualité du signal est supérieure ou égale à un seuil de qualité de signal préétabli, l'envoi (302), par l'UE, d'informations d'indication à la macro station de base, dans lequel les informations d'indication sont utilisées pour demander à la macro station de base de configurer un second schéma d'écart de mesure pour l'UE, et une période d'écart de mesure dans le second schéma d'écart de mesure est inférieure à une période d'écart de mesure dans le premier schéma d'écart de mesure ; et
la réception (303), par l'UE, du second schéma d'écart de mesure configuré par la macro station de base, la réception, selon le second schéma d'écart de mesure, du signal émis par la petite station de base, et l'identification et la mesure de la petite cellule de la petite station de base d'après le signal reçu émis par la petite station de base ;
dans lequel avant la réception, par l'UE selon un premier schéma d'écart de mesure configuré par une macro station de base, d'un signal émis par une petite station de base, le procédé comprend en outre :

la réception (401), par l'UE, d'informations de fréquence porteuse utilisées par la petite station de base, d'informations de fenêtre temporelle de réception du signal émis par la petite station de base, et d'une liste d'identités de cellules physiques qui sont envoyées par la macro station de base ; et
dans lequel avant la réception, par l'UE selon un premier schéma d'écart de mesure configuré par une macro station de base, d'un signal émis par une petite station de base, le procédé comprend en outre :

la commutation (402), par l'UE, à un mode de réception continu de signal ; et
l'activation (403), par l'UE, d'une liaison de fréquence radio inactive, pour identifier et mesurer la petite cellule de la petite station de base.

**4.** Procédé selon la revendication 3, dans lequel la qualité du signal fait référence à la puissance ou un rapport signal sur interférence plus bruit du signal.

**5.** Procédé selon la revendication 4, dans lequel le seuil de qualité de signal est fixé par la macro station de base et notifié à l'UE par radiodiffusion ou en utilisant un message dédié de commande de ressource radio RRC, ou est fixé par l'UE.

**6.** Macro station de base, comprenant :

une unité de configuration (501), configurée pour configurer un premier schéma d'écart de mesure pour un équipement utilisateur, UE, dans laquelle le premier schéma d'écart de mesure fait référence à un format de données qui est fixé par la macro station de base pour suspendre une transmission de données avec l'UE lorsque l'UE identifie et mesure une petite station de base ; et
une unité de réception (502), configurée pour recevoir des informations d'indication envoyées par l'UE, dans laquelle les informations d'indication sont utilisées pour signaler qu'une qualité d'un signal émis par la petite station de base et reçu par l'UE est supérieure ou égale à un seuil de qualité de signal préétabli, dans laquelle la qualité du signal émis par la petite station de base est obtenue par le biais d'une mesure par l'UE selon le premier schéma d'écart de mesure, dans laquelle l'unité de configuration est en outre configurée pour : après que l'unité de réception reçoit les informations d'indication envoyées par l'UE, configurer un second schéma d'écart de mesure pour l'UE, dans laquelle une période d'écart de mesure dans le second schéma d'écart de mesure est inférieure à une période d'écart de mesure dans le premier schéma d'écart de mesure ;
dans laquelle la macro station de base comprend en outre :
une unité d'envoi (602), configurée pour envoyer, à l'UE, des informations de fréquence porteuse utilisées par la petite station de base, des informations de fenêtre temporelle de réception du signal émis par la petite station de base, et une liste d'identités de cellules physiques.

**7.** Macro station de base selon la revendication 6, dans laquelle la qualité du signal fait référence à la puissance ou un rapport signal sur interférence plus bruit du signal reçu.

**8.** Equipement utilisateur, UE, comprenant :

une unité de réception (701), configurée pour recevoir, selon un premier schéma d'écart de mesure configuré par une macro station de base, un signal émis par une petite station de base ;

une unité de traitement (702), configurée pour mesurer une qualité du signal reçu par l'unité de réception, et identifier et mesurer une petite cellule de la petite station de base d'après le signal reçu par l'unité de réception ; et

une unité d'envoi (703), configurée pour : lorsque l'unité de traitement détermine que la qualité du signal est supérieure ou égale à un seuil de qualité de signal préétabli, envoyer des informations d'indication à la macro station de base, dans lequel les informations d'indication sont utilisées pour demander à la macro station de base de configurer un second schéma d'écart de mesure pour l'UE, et une période d'écart de mesure dans le second schéma d'écart de mesure est inférieure à une période d'écart de mesure dans le premier schéma d'écart de mesure, dans lequel

l'unité de réception est en outre configurée pour recevoir le second schéma d'écart de mesure configuré par la macro station de base, et recevoir, selon le second schéma d'écart de mesure, le signal émis par la petite station de base ; et

l'unité de traitement est en outre configurée pour identifier et mesurer la petite cellule de la petite station de base d'après le signal reçu, selon le second schéma d'écart de mesure, par l'unité de réception ;

dans lequel avant la réception, selon le premier schéma d'écart de mesure configuré par la macro station de base, du signal émis par la petite station de base, l'unité de réception est en outre configurée pour :

recevoir des informations de fréquence porteuse utilisées par la petite station de base, des informations de fenêtre temporelle de réception du signal émis par la petite station de base, et une liste d'identités de cellules physiques qui sont envoyées par la macro station de base ; et

dans lequel l'UE comprend en outre :

une unité de commutation (802), configurée pour : avant que l'unité de réception reçoive, selon le premier schéma d'écart de mesure configuré par la macro station de base, le signal émis par la petite station de base, commuter d'un mode de réception discontinu de signal à un mode de réception continu de signal ; et

une unité d'activation de liaison (803), configurée pour : avant que l'unité de réception reçoive, selon le premier schéma d'écart de mesure configuré par la macro station de base, le signal émis par la petite station de base, activer une liaison de fréquence radio inactive, pour identifier et mesurer la petite cellule de la petite station de base.

**9.** UE selon la revendication 8, dans lequel le signal est un signal de synchronisation primaire, PSS, un signal de synchronisation secondaire, SSS, ou un autre signal pilote.

**10.** UE selon la revendication 8 ou 9, dans lequel la qualité du signal fait référence à la puissance ou un rapport signal sur interférence plus bruit du signal.

**11.** UE selon l'une quelconque des revendications 8 à 10, dans lequel le seuil de qualité de signal est fixé par la macro station de base et notifié à l'UE par radiodiffusion ou en utilisant un message dédié de commande de ressource radio, RRC, ou est fixé par l'UE.

A macro base station configures a first measurement gap pattern for UE — 101

The macro base station receives indication information sent by the UE — 102

The macro base station configures a second measurement gap pattern for the UE — 103

FIG. 1

A macro base station configures a first measurement gap pattern for UE — 201

The macro base station sends, to the UE, carrier frequency information of existence of a small base station, reception time window information of a signal radiated by the small base station, and a physical layer cell identity list — 202

The macro base station receives indication information sent by the UE — 203

The macro base station configures a second measurement gap pattern for the UE — 204

FIG. 2

UE receives, according to a first measurement gap pattern configured by a macro base station, a signal radiated by a small base station, measures quality of the received signal, and identifies and measures a small cell of the small base station based on the received signal — 301

When the UE determines that the quality of the received signal is higher than or equal to a preset signal quality threshold, the UE sends indication information to the macro base station — 302

The UE receives a second measurement gap pattern configured by the macro base station, receives, according to the second measurement gap pattern, the signal radiated by the small base station, and identifies and measures the small cell of the small base station based on the received signal radiated by the small base station — 303

FIG. 3

UE receives carrier frequency information of existence of a small base station, reception time window information of a signal radiated by the small base station, and a physical layer cell identity list that are sent by a macro base station ⟋— 401

↓

The UE switches to a signal continuous reception mode ⟋— 402

↓

The UE activates an idle radio frequency link ⟋— 403

↓

The UE receives, according to a first measurement gap pattern configured by the macro base station, the signal radiated by the small base station, measures quality of the received signal, and identifies and measures a small cell of the small base station based on the received signal ⟋— 404

↓

When the UE determines that the quality of the received signal is higher than a preset signal quality threshold, the UE sends indication information to the macro base station ⟋— 405

↓

The UE receives a second measurement gap pattern configured by the macro base station, receives, according to the second measurement gap pattern, the signal radiated by the small base station, and identifies and measures the small cell of the small base station based on the received signal radiated by the small base station ⟋— 406

FIG. 4

⟋— 501          ⟋— 502

| Configuration unit | Receiving unit |

FIG. 5

601

Configuration unit

602

Sending unit

603

Receiving unit

FIG. 6

701

Receiving unit

702

Processing unit

703

Sending unit

FIG. 7

801

Receiving unit

802

Switching unit

803

Link activation unit

805

Sending unit

804

Processing unit

FIG. 8

901

First processor

902

First transmitter

903

First receiver

FIG. 9

1001

Second receiver

1002

Second processor

1003

Second transmitter

FIG. 10

**EP 3 065 443 B1**

## REFERENCES CITED IN THE DESCRIPTION

**Patent documents cited in the description**

- WO 2013049199 A